## Europäisches Patentamt

## European Patent Office

## Office européen des brevets

(11) Publication number: **0 027 045**
**B1**

(12) **EUROPEAN PATENT SPECIFICATION**

(45) Date of publication of patent specification: **23.01.85**

(51) Int. Cl.⁴: **G 03 G 15/00, B 65 H 1/06**

(21) Application number: **80303500.5**

(22) Date of filing: **03.10.80**

(54) **Bottom sheet separator-feeder.**

(30) Priority: **03.10.79 US 81591**
**03.10.79 US 81498**
**03.10.79 US 81592**
**03.10.79 US 81595**
**03.10.79 US 81596**

(43) Date of publication of application:
**15.04.81 Bulletin 81/15**

(45) Publication of the grant of the patent:
**23.01.85 Bulletin 85/04**

(84) Designated Contracting States:
**BE DE FR GB IT NL**

(56) References cited:
**AT-B- 353 221**
**DE-A-2 550 606**
**DE-A-2 822 692**
**DE-C- 969 125**
**FR-A- 941 321**
**GB-A-1 287 904**

(73) Proprietor: **XEROX CORPORATION**
**Xerox Square - 020**
**Rochester New York 14644 (US)**

(72) Inventor: **Lohr, S. Warren**
**80 Indiana Street**
**Rochester New York 14609 (US)**
Inventor: **Silverberg, Morton**
**23 Old Pond Road**
**Rochester New York (US)**

(74) Representative: **Prior, Nicholas J. European**
**Patent Attorney et al**
**Rank Xerox Patent Department 338 Euston Road**
**London NW1 3BH (GB)**

Courier Press, Leamington Spa, England.

## Description

This invention relates to bottom sheet separator-feeders for separating and forwarding sheets seriatim. Such a separator-feeder includes a stack tray adapted for supporting a stack of sheets, frictional feed means for forwarding the bottom sheet in the stack, and a vacuum plenum associated with said feed means, said plenum having openings therein facing the bottom sheet in the stack, said feed means being spaced below the supported position of the planar surface of the bottom sheet in the stack, lowering of the air pressure in said plenum below atmospheric pressure causing the bottom sheet in the stack to be drawn into contact with and acquired by said feed means for separation and forwarding of the bottom sheet from said stack, and an air knife arranged to direct an air flow towards the acquired bottom sheet, said air flow serving to separate the bottom sheet from the remainder of the sheets in the stack and reduce drag forces between the bottom sheet and the bottom of the remainder of the stack. A sheet separator feeder of this kind is described in DE—A—960,125.

With the advent of high speed xerographic copy reproduction machines wherein copies can be produced at a rate in excess of three thousand copies per hour, the need for a document handler to feed documents to the copy platen of the machine in a rapid, dependable matter was recognized to enable full utilization of the reproduction machines potential copy output. A number of document handlers are currently available to fill that need. These document handlers must operate flawlessly to virtually eliminate the risk of damaging the originals and generate minimum machine shutdowns due to uncorrectable misfeeds or document multifeeds. It is in the initial separation of the individual documents from the document stack where the greatest number of problems occur.

Since the documents must be handled gently but positively to assure separation without damage through a number of cycles, a number of separators have been suggested such as friction rolls or belts used for fairly positive document feeding in conjunction with a retard belt, pad, or roll to prevent multifeeds. Vacuum separators such as sniffer tubes, rocker type vacuum rolls, or vacuum feed belts have also been utilized.

While the friction roll-retard systems are very positive, the action of the retard member, if it acts upon the printed face can cause smearing or partial erasure of the printed material on the document. With single sided documents, this does not present a problem as the separator can be designed so that the retard mechanism acts upon the underside of the document. However, with documents printed on both sides, there is no way to avoid the problem. Additionally, the reliable operation of friction retard feeders is highly dependent on the relative frictional properties of the paper being handled. This cannot be controlled in a document feeder.

The present invention is intended to provide an improved bottom sheet separator-feeder which consistently feeds sheets in a positive yet gentle manner without multifeeds. The separator-feeder of the invention is characterised in that said vacuum plenum has a raised portion to form at least one corrugation in the bottom sheet when the bottom sheet in the stack is drawn into contact with said feed means, said corrugation extending in the sheet feed direction to form a gap between the bottom sheet and the next sheet in the stack, and in that said air knife is arranged to direct the air flow against the leading edge of the bottom sheet and into said gap.

The frictional feed means may include a plurality of vacuum feed belts spaced from the bottom surface of the document stack, the stack being supported on a stack tray having a "U" shaped pocket formed therein, at least one of the belts being positioned below the tray such that in operation the bottom sheet in the stack is pulled into contact with the feed belts and corrugated. The corrugation stiffens and decurls the lead edge of the bottom sheet. The beam strength of the second sheet resists following the corrugating action. The air knife may have a plurality of sharp edged orifices arranged to provide a plurality of air streams directed at approximately a 30° angle downwardly toward the lead edge of the bottom sheet, the air stream from each orifice diverging into dead air space between the jets, expansion of each stream inducing velocities and pressure gradients along its course for optimum feeder performance.

Embodiments of bottom sheet separator-feeder in accordance with the invention will now be described, by way of example, with reference to the accompanying drawings, in which:—

Figure 1 is a cross-sectional view of an exemplary document handler employing a sheet separator-feeder of the present invention,

Figure 2 is an enlarged, cross-sectional view of the separator-feeder portion of the document handler of Figure 1,

Figure 3 is an end view, partially in section of the vacuum feed belts illustrated in Figure 2,

Figure 4 is a top view of the document tray and feed belts of the document handler illustrated in Figure 1,

Figure 5 is a partial perspective view of the discharge end of the air knife illustrating the air discharge orifices, and

Figure 6 is a top view, like that of Figure 4, of the document tray and feed belts of a second embodiment.

Referring to the drawings, there is illustrated an automatic document handler 1 for installation above the exposure platen 3 of a xerographic reproduction machine. The document handler is provided with a document tray 5 to be explained more fully hereinafter, adapted for supporting a stack of documents 7 face up. A vacuum belt-corrugating feeder mechanism 9 is located below the document tray for acquiring and corrugating the bottom document in the stack and forwarding the document to take away roll pair 11 after an air knife 12 has had time to separate the document from the rest of the stack. The document is then fed by take-away roll pair 11 through document guide 13 to feed-roll pair 15 and under platen belt 17 onto the platen of the copy machine for reproduction. After exposure of the document, it is fed off the platen by belt 17 into guide 19 and feed-roll pairs 21 and 23 either to an inverter mechanism 25 or back to the document stack through the feed-roll pair 27. A diverter 29 is provided to divert the document either to the inverter or to the feedroll pair 27. The inverter comprises a three roll arrangement 31 and a closed inverter pocket 33. If the document is to be inverted it is fed through the lower two rolls of the three roll inverter into the pocket. When the trail edge of the document clears the nip of the lower two rolls in the three roll inverter, the stiffness of the sheet will cause the trail edge to straighten up into the nip of the upper two rolls of the inverter at which time it will be fed into roll pair 27 and back into the document stack. The inverter pocket illustrated is sized such that when the leading edge of the document contacts the end of the pocket, the document will buckle slightly within the upper portion of the pocket 33, the buckle thereby providing the required force to feed the trailing edge of the document into the upper roll pair of the inverter rolls for feeding the sheet toward roll pair 27. If desired, an open ended inverter pocket could be utilized having a feed roll pair associated therewith for feeding the document back into the upper roll pair in a positive manner rather than relying on the sheet buckle to feed the document thereto.

The document handler is also provided with a sheet separator finger 35 as is well known in the art to separate the documents to be fed from those documents returned to the document handler. Upon removal of the last document from beneath sheet separator finger 35, the finger 35 drops through a slot provided in the tray, suitable sensors are provided to sense that the last document in the set has been removed from the tray and the finger is then rotated in a clockwise direction to again come to rest on the top of the documents in the stack prior to subsequent recirculation of the document set.

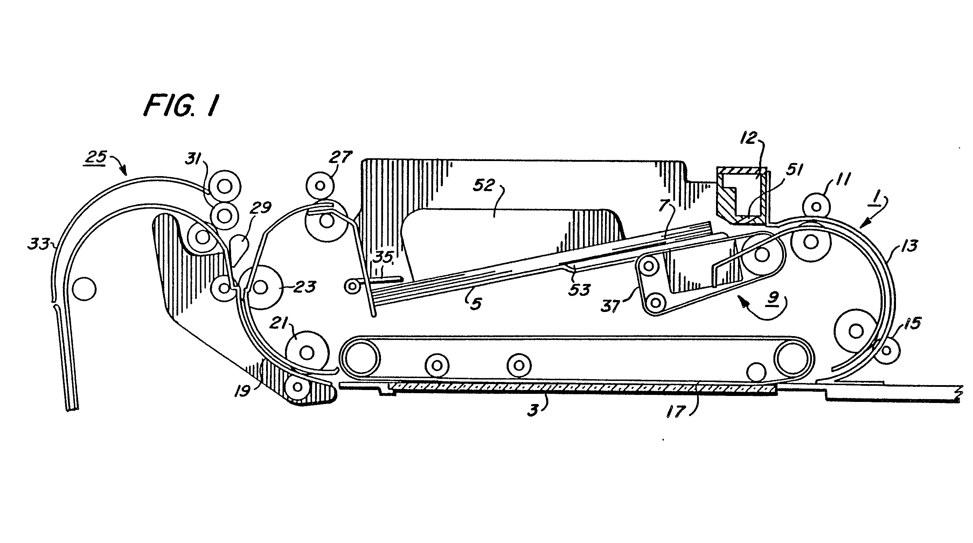

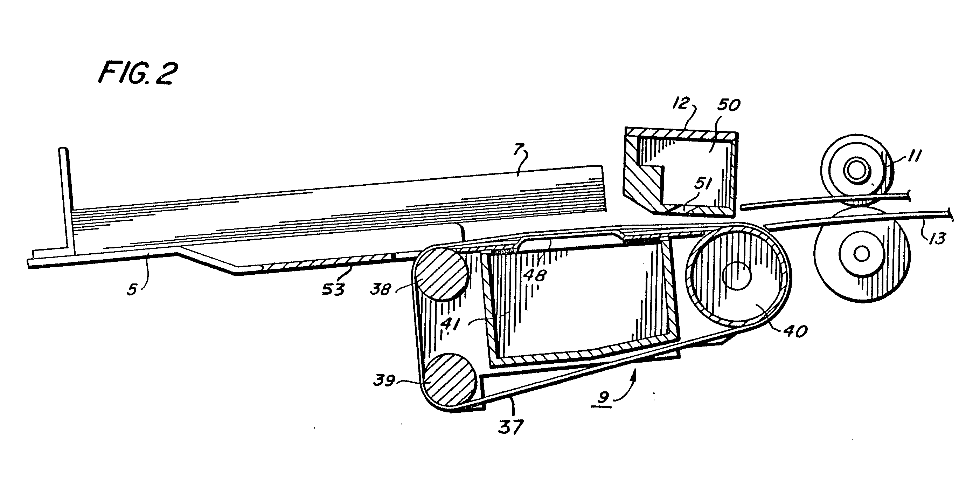

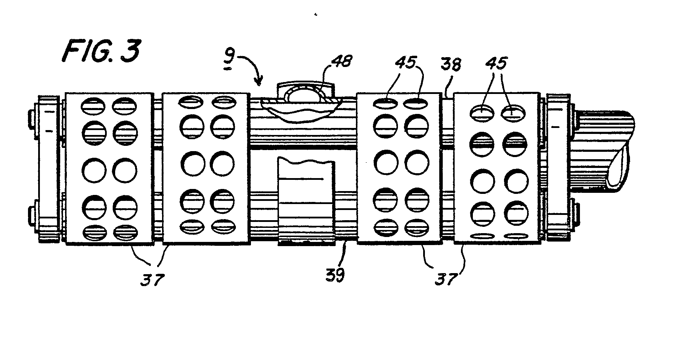

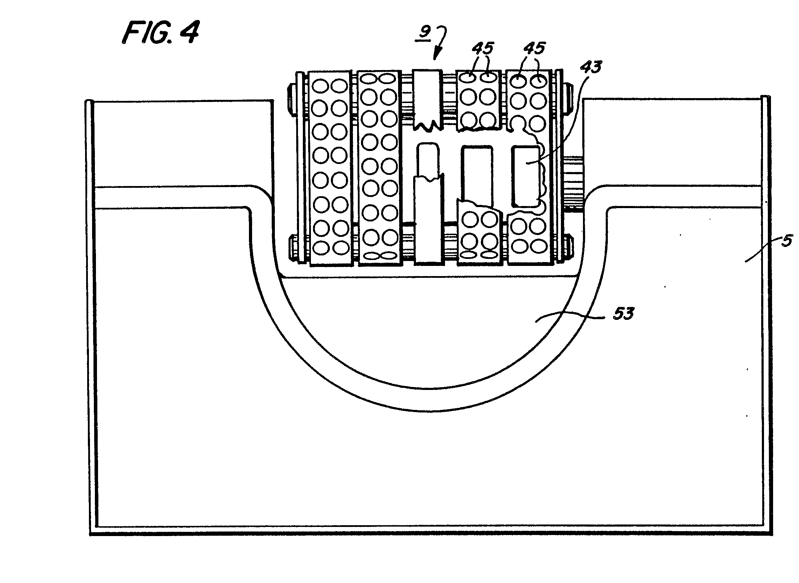

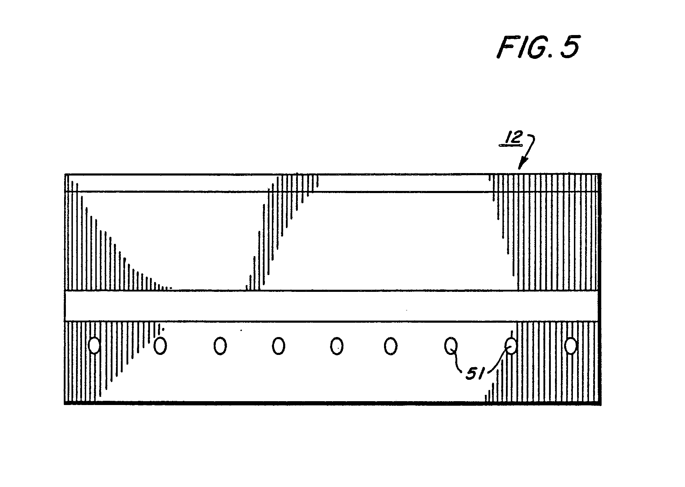

Referring more particularly to Figures 2, 3 and 4 wherein the novel document separator-feeder is more clearly illustrated, there is disclosed a plurality of feed belts 37 supported for movement on feed belt rolls 38, 39, and 40. Spaced within the run of the belts 37 there is provided a vacuum plenum 41 having openings 43 therein adapted for cooperation with perforations 45 in the belts 37 to provide a vacuum for pulling the bottom documents in the document stack onto the belts 37. As can be seen from Figure 3, the plenum is provided with a raised portion 48 beneath the center belt run so that upon capture of the bottom document in the stack against belts 37, a center corrugation will be produced in the bottom sheet. Note also that the belts are below the surrounding support surfaces. Thus the document is corrugated into a double valley configuration. The flat surfaces of the vacuum belts on each side of the raised center belt generates a region of maximum stress in the document which varies with the document beam strength. In the unlikely event that more than one document is pulled down into contact with the feed belts, the beam strength of the second document resists the corrugating action, thus gaps are opened between sheets one and two which extend to their lead edges. These gaps and channels reduce the vacuum levels between sheets one and two due to porosity in sheet one and provide for entry of the separating air flow from the air knife 12. The air knife 12 comprised of pressurized air plenum 50 having a plurality of air jet openings 51 is provided to inject air between the document pulled down against the feed belt and the documents thereabove to provide an air cushion or bearing between the stack and the bottom document to minimize the force necessary for removing the bottom document from the stack. It can be seen by reference to Figure 5 that the air knife 12, rather than having a long, continuous slot to discharge air into the lead edge of the stack to separate the bottom sheet from the remainder of the stack by establishing an air cushion therebetween, is provided with a plurality of separated discharge orifices 51. By providing separated orifices, a dramatic improvement in the effectiveness of the discharged air to provide the desired air cushion or sheet separation is achieved. It appears that the air stream or jet emerging from each orifice diverges and expands into the dead air space between the jets. This diversion and expansion of the streams induces both velocity and pressure gradients in the discharged air which results in a more effective air cushion at lower air discharge rates. It can be understood that if two documents are pulled down toward the belts 37, since the top sheet would not be corrugated, the air knife would inject air into the space between the two documents and force the second document off from the raised belt back toward the document stack. Control of the height to which the stack is raised by the air pressure under sheet two is provided by openings such as cutaway 52 in the side wall (Figure 1) and openings in the rear wall (not shown). These openings vent the air under sheet two when the stack is lifted to the height of the openings.

If the document feeder is to be used with large document stacks where the air knife might be insufficient to provide the desired air bearing between the bottom document and the remainder of the stack, supplementary side air jets may be utilized although they have been found to be unnecessary for the conditions normally encountered in current reproduction machines.

While perforated belts cooperating with openings in the vacuum plenum have been disclosed, it may be desirable to use "O" ring type feed belts with the vacuum plenum perforations located between the belt runs rather than beneath the belts. If "O" ring type feed belts are used however, the number of belts must be increased so that the spacing between belts is small enough to prevent the document being drawn down into contact with the vacuum plenum. Additionally the plenum surface should be raised up between the "O" ring belts in the region of the document lead edge. This raised portion is to minimize vacuum air flow under lead edge of the bottom sheet after it has been acquired. This helps prevent multifeeds when the lead edge of the second sheet is further forward then lead edge of the bottom sheet.

To assure positive capture of the bottom sheet on the feed belts, a time delay is desirably provided between application of the vacuum and energization of the feed belts by suitable valving and controls. The delay allows time for the bottom sheet to be pulled down onto the belts and corrugated. Further, if multiple sheets are initially pulled down because the sheets are stuck together by electrostatic forces, interlocking paper fibers caused by previous binding or stapling of the documents (which would of necessity have been removed prior to placement of the documents in the stack tray), damaged edges of the documents which could interlock adjacent sheets, etc., the delay allows time for the air knife to inject air between the multiple sheets at the corrugation area of the feeder to lift all but the single bottom sheet back towards the remainder of the stack. Following this short delay, when the sheet to be fed is firmly adhered to the feed belts and the air knife has had time to establish an air bearing between the sheet to be fed and the remainder of the stack, the feed belt mechanism is energized. In the disclosed separator-feeder arrangement, a delay of 250 milliseconds between application of the vacuum and energization of the feed belts has been found to provide extremely reliable operation.

By allowing time for the formation of the air bearing, separation of multiple sheets initially pulled down onto the feed belts, and positive capture of the bottom sheet on the belts, the separation forces are minimized. This minimizes the possibility of slippage between the feed belts and the sheet, minimizes the forces required to hold back the remaining sheets and thus potential damage to their lead edges and minimizes friction between sheets one and two and thus the possibility of their marking one another, thereby preventing document smear or erasure that could be encountered if slippage were to occur between the sheet and feed belt.

By reference to Figures 1, 2 and 4 it can be seen that the document tray 5 is provided with a depressed portion or pocket 53 having a generally U-shaped outline behind the feed belt assembly. This pocket serves a number of purposes. First, space is provided for the forward portion of the bottom document to be pulled down onto the feed belt assembly providing for formation of the two valley corrugation previously mentioned. Secondly, the vacuum is applied over the area of the pocket with an air seal between the bottom document provided by the U-shaped edges of the pocket. The air seal maximizes the vacuum force over the whole area of the pocket thus helping to pull the bottom document onto the feed belt assembly. A third function of the U-shaped pocket is to provide for a high pressure seal between sheet one and the remainder of the stack. This high pressure seal is achieved by supporting a major portion of the stack weight in the edge regions of the pocket. The seal serves to reliably convert the velocity energy of the air knife flow into a lifting pressure over the pocket area. One desirable implementation is to have the air knife discharge air only in the region opposite the pocket.

To further increase the efficiency of the system, the stack tray is provided with a rearward tilt as seen in Figures 1 and 2. When floatation air is provided under the stack or between the first and second sheets, gravity will allow the sheets to settle or float back against the rear tray wall. Thus, the sheet being removed is pulled uphill while gravity helps hold the remainder of the sheets back, helping to prevent multifeeds.

With this disclosed arrangement of pocket geometry, improved air knife and spaced, corrugating feed belt assembly, optimum document separation and feed can be obtained without the necessity for retard members or multiple sheet stops. Further the system is extremely gentle yet positive.

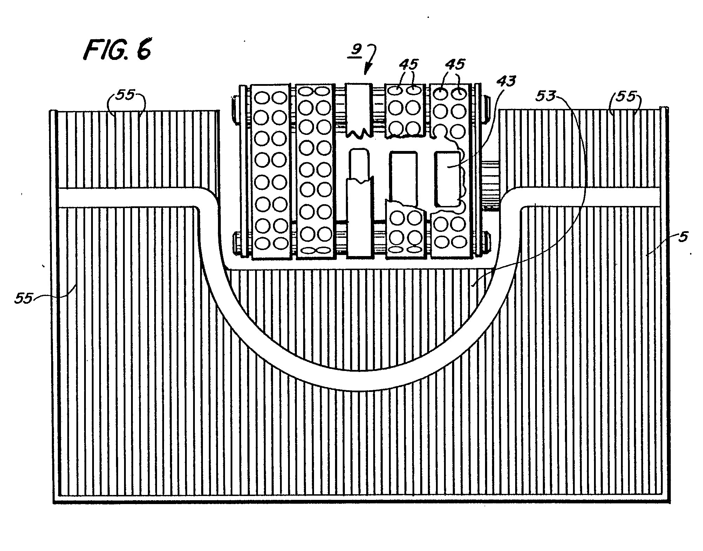

In another embodiment as shown in Figure 6, the entire top surface of the stack tray is striated by providing a plurality of grooves 55 parallel to the direction of sheet removal from the tray. It appears that these striations result in a number of performance improvements. Since it is desirable to provide air to the air knife 12 at all times, when a sheet is not being fed, i.e., vacuum is not present in the feed belt area, the air knife not only provides air flow between adjacent sheets, but also provides a layer of air between the tray surface and the bottom sheet in the stack. The striations encourage laminar flow across the surface of the tray, thereby reducing turbulence.

The increased lifting efficiency resulting from the laminar flow may allow the sheet feeder to handle larger or heavier stacks of sheets or if desired, allow the use of a smaller blower. The laminar flow also appears to stabilize light weight sheets, minimizing the tendency for them to blow away.

It appears that the grooves 55 enhance the performance of the separator-feeder. This performance enhancement would be obtained, not only in the embodiment illustrated, but also in any bottom sheet feeder wherein an air bearing is produced between the stack tray and the bottom sheet in the tray when an air knife is utilized to provide air floatation by injection of air beneath the stack in the direction of the striations.

While I have described a preferred embodiment of my invention, it should be understood that the invention may be otherwise embodied within the scope of the following claims. For example, the pocket 53 may have a parabolic outline.

## Claims

1. A bottom sheet separator-feeder for separating and forwarding sheets seriatim including a stack tray (5) adapted for supporting a stack of sheets, frictional feed means (37) for forwarding the bottom sheet in the stack, and a vacuum plenum (41) associated with said feed means, said plenum having openings therein facing the bottom sheet in the stack, said feed means being spaced below the supported position of the planar surface of the bottom sheet in the stack, lowering of the air pressure in said plenum below atmospheric pressure causing the bottom sheet in the stack to be drawn into contact with and acquired by said feed means (37) for separation and forwarding of the bottom sheet from said stack, and an air knife (12) arranged to direct an air flow towards the acquired bottom sheet, said air flow serving to separate the bottom sheet from the remainder of the sheets in the stack and reduce drag forces between the bottom sheet and the bottom of the remainder of the stack, characterised in that said vacuum plenum has a raised portion (48) to form at least one corrugation in the bottom sheet when the bottom sheet in the stack is drawn into contact with said feed means, said corrugation extending in the sheet feed direction to form a gap between the bottom sheet and the next sheet in the stack, and in that said air knife is arranged to direct the air flow against the leading edge of the bottom sheet and into said gap.

2. A sheet separator-feeder according to claim 1, wherein said frictional feed means comprises a plurality of feed belts (37), said plenum (41) being disposed within the belt runs and having openings therein for communication with perforations (45) in said belts.

3. A sheet separator-feeder according to claim 2, wherein said raised portion (48) of said plenum (41) underlies at least one of said belts (37) to raise said at least one belt (37) above the plane of the top surface of the remainder of said belts (37) such that when the bottom sheet in the stack is forced against said belts, said corrugation is formed therein by said raised belt.

4. A sheet separator-feeder according to claim 1, wherein said stack tray (5) has a pocket (53) formed therein, which is preferably generally U-shaped, and said frictional feed means (37) and said vacuum plenum (41) are disposed in said pocket and adapted to pull the bottom sheet in the stack into the pocket and feed the sheet from beneath the sheet stack.

5. A sheet separator-feeder according to claim 4, wherein said tray (5) includes a depressed portion along the entire front section of the tray adjacent said feed means, said depressed portion being contiguous with said pocket (53).

6. A sheet separator-feeder according to claim 4 or 5, wherein said air knife (12) has a plurality of spaced discharge orifices (51) therein, movement of the bottom sheet in the stack into said pocket (53) by said feed means (37) causing a pocket shaped depression in the bottom sheet, thereby providing a space between the bottom sheet and the remainder of the stack for receiving the plurality of air jets from said air knife (12) to provide optimized air flow over the top of the bottom sheet to maintain the bottom sheet spaced from the remainder of the stack.

7. A sheet separator, feeder according to any preceding claim including means for controlling the operation of said feed means (37) and vacuum plenum (41) such that the sheet is subjected to sub-atmospheric pressure to draw the bottom sheet in the stack into contact with the feed means (37) for a predetermined period of time before the feed means (37) is activated to feed the sheet from the bottom of the stack.

8. A sheet separator-feeder according to any preceding claim, in which the top surface of said tray (5) has striations (53, 55) formed therein, and the air knife (12) is adapted to provide a flow of air in the direction of the striations (53, 55) between the top surface of said tray (5) and the underside of the bottom sheet in the sheet stack, said striations (53, 55) encouraging laminar flow of air over said tray (5) to minimize turbulence and increase the lifting efficiency of the air injection means (12).

## Revendications

1. Dispositif d'alimentation-séparateur de feuille inférieure destiné à séparer et faire avancer des feuilles en série, comprenant un plateau (5) pour pile destiné à supporter une pile de feuilles, un moyen d'alimentation par friction (37) pour faire avancer la feuille inférieure de la pile, et une chambre sous vide (41) associée au moyen d'alimentation, cette chambre comportant des ouvertures en regard de la feuille inférieure de la pile, le moyen d'alimentation étant espacé du dessous de la position supportée de la surface plane de la feuille inférieure de la pile, l'abaissement de la pression d'air dans la chambre au-dessous de la pression atmosphérique, ayant pour effet que la feuille inférieure de la pile est amenée en contact avec le moyen d'alimentation (37) et acquise par celui-ci pour séparation et avancement de la feuille inférieure à partir de la pile, et un couteau d'air (12) disposé de manière à diriger un courant d'air vers la feuille inférieure acquise, ce courant d'air servant à séparer la feuille inférieure du reste des feuilles de la pile et à réduire les forces de frottement entre la feuille inférieure et le fond du reste de la pile, caractérisé en ce que la chambre sous vide comporte une partie surélevée (48) de manière à former au moins une ondulation dans la feuille inférieure lorsque la feuille inférieure de la pile est amenée en contact avec le moyen d'alimentation, cette ondulation s'étendant dans le sens d'alimentation des feuilles de manière à former un interstice entre la feuille inférieure et la feuille suivante de la pile, et en ce que le couteau d'air est disposé de manière à diriger le courant d'air contre le bord avant de la feuille inférieure et dans l'interstice.

2. Dispositif d'alimentation-séparateur de feuille selon la revendication 1, où le moyen d'alimentation par friction comprend une pluralité de courroies d'alimentation (37), la chambre (41) étant disposée à l'intérieur des brins des courroies et comportant des ouvertures pour communication avec des perforations (15) ménagées dans les courroies.

3. Dispositif d'alimentation-séparateur de feuille selon la revendication 2, où la partie en surélévation (48) de la chambre (41) se trouve au-dessous d'au moins l'une des courroies (37) afin d'élever au moins ladite courroie (37) au-dessus du plan de la surface supérieure du reste des courroies (37) de sorte que, lorsque la feuille inférieure de la pile est appliquée par force contre les courroies, l'ondulation y est formée par la courroie surélevée.

4. Dispositif d'alimentation-séparateur de feuille selon la revendication 1, où le plateau (5) de la pile comporte une poche (53), qui a de préférence la forme générale d'un U, et le moyen d'alimentation par friction (37) et la chambre à vide (41) sont disposés dans la poche et destinés à tirer la feuille inférieure de la pile pour l'introduire dans la poche et à procéder à l'alimentation de la feuille à partir du dessous de la pile de feuilles.

5. Dispositif d'alimentation-séparateur de feuille selon la revendication 4, où le plateau (5) comprend une partie surbaissée sur la totalité de la section avant du plateau contiguë au moyen d'alimentation, cette partie surbaissée étant contiguë à la poche (53).

6. Dispositif d'alimentation-séparateur de feuille selon la revendication 4 ou la revendication 5, où le couteau d'air (12) comporte une pluralité d'orifices de décharge espacés les uns des autres (51), le mouvement de la feuille inférieure de la pile pour entrer dans la poche (53) sous l'effet du moyen d'alimentation (37) provoquant une dépression en forme de poche dans la feuille inférieure, d'où il résulte la création d'un espace entre la feuille inférieure et le reste de la pile destiné à recevoir la pluralité des jets d'air provenant du couteau d'air (12) afin de fournir un courant d'air optimisé sur le dessus de la feuille inférieure dans le but de maintenir cette feuille espacée du reste de la pile.

7. Dispositif d'alimentation-séparateur de feuille selon l'une quelconque des revendications précédentes, comprenant un moyen pour commander le fonctionnement du moyen d'alimentation (37) et le chambre à vide (41) de façon que la feuille soit soumise à une pression sous-atmosphérique afin d'amener la feuille inférieure de la pile en contact avec le moyen d'alimentation (37) pendant une durée prédéterminée avant que le moyen d'alimentation (37) soit activé pour alimenter la feuille à partir du fond de la pile.

8. Dispositif d'alimentation-séparateur de feuille selon l'une quelconque des revendications précédentes, dans lequel la surface supérieure du plateau (5) comporte des stries (53, 55), et le couteau d'air (12) est destiné à former un courant d'air dans le sens des stries (53, 55) entre la surface supérieure du plateau (5) et le côté inférieur de la feuille inférieure de la pile de feuilles, ces stries (53, 55) encourageant un courant laminaire d'air sur le plateau (5) afin de minimiser les turbulences et augmenter l'efficacité de levage du moyen d'injection d'air (12).

**Patentansprüche**

1. Bodenblatt-Trenn- und Fördervorrichtung zum Trennen und Fördern von Blättern der Reihe nach mit einem zum Abstützen eines Stapels von Blättern eingerichteten Stapeltablett (5), mit einer Reibungs-Födereinrichtung (37) zum Abfördern des Bodenblatts im Stapel und mit einer Vakuumkammer (41), die der genannten Födereinrichtung zugeordnet ist, wobei die genannte Kammer dem Bodenblatt im Stapel zugewandte Öffnungen aufweist, die genannte Fördereinrichtung mit Abstand unterhalb der abgestützten Position der ebenen Fläche des Bodenblatts im Stapel angeordnet ist, und ein Absenken des Luftdrucks in der genannten Kammer bis unterhalb des atmosphärischen Drucks bewirkt, daß das Bodenblatt im Stapel bix zum Kontakt mit der genannten und zur Übernahme durch die genannte Fördereinrichtung (37) zum Trennen und Abförderns des Bodenblattes vom genannten Stapel angesaugt wird, und mit einem Luftmesser (12), das angeordnet ist, eine Luftströmung auf das übernommene Bodenblatt zu richten, wobei die genannte Luftströmung dazu dient, das Bodenblatt vom verbleibenden Teil der Blätter im Stapel zu trennen und Zugwiderstandskräfte zwischen dem Bodenblatt und dem Boden des verbleibenden Teils des Stapels zu verringern, dadurch gekennzeichnet, daß die genannte Vakuumkammer einen erhöhten Teil (48) aufweist, um wenigstens eine Welle im Bodenblatt zu bilden, wenn das Bodenblatt im Stapel bis zum Kontakt mit der genannten Fördereinrichtung angesaugt wird, wobei die genannte Welle in der Blattförderrichtung verläuft, um einen Zwischenraum zwischen dem Bodenblatt und dem nachfolgenden Blatt im Stapel zu bilden, und daß das genannte Luftmesser angeordnet ist, die Luftströmung gegen den vorlaufenden Rand des Bodenblattes und in den genannten Zwischenraum hinein zu richten.

2. Blatt-Trenn- und Fördervorrichtung nach Anspruch 1, in welcher die genannte Reibungs-Fördereinrichtung eine Mehrzahl von Förderbändern (37) umfaßt, und die genannte Kammer (41) innerhalb des Bänderlaufs angeordnet ist und Öffnungen zur Verbindung mit Perforationen (45) in den genannten Bändern aufweist.

3. Blatt-Trenn- und Fördervorrichtung nach Anspruch 2, in welcher der erhöhte Teil (48) der genannten Kammer (41) unter wenigstens einem der genannten Bänder (37) angeordnet ist, um das genannte wenigstens eine Band (37) über die Ebene der oberen Fläche der verbleibenden Bänder (37) hinaus derart anzuheben, daß dann, wenn das Bodenblatt im Stapel gegen die genannten Bänder gezwungen wird, die genannte Welle im Bodenblatt durch das genannte angehobene Band ausgeformt wird.

4. Blatt-Trenn- und Fördervorrichtung nach Anspruch 1, in welcher das genannte Stapeltablett (5) eine darin ausgebildete Tasche (53) aufweist, welche vorzugsweise allgemein U-förmig ist, und die genannte Reibungs-Fördereinrichtung (37) und die genannte Vakuumkammer (41) in der gennannten Tasche angeordnet und eingerichtet sind, das Bodenblatt im Stapel in die Tasche hineinzuziehen und das Blatt von unterhalb des Blattstapels abzufördern.

5. Blatt-Trenn- und Fördervorrichtung nach Anspruch 4, in welcher das genannte Tablett (5) einen vertieften Abschnitt entlang dem gesamten Vorderabschnitt des Tabletts benachbart der genannten Fördereinrichtung aufweist, wobei der genannte vertiefte Abschnitt angrenzend an die genannte Tasche (53) angeordnet ist.

6. Blatt-Trenn- und Fördervorrichtung nach Anspruch 4 oder 5, in welcher das genannte Luftmesser (12) eine darin ausgebildete Mehrzahl von mit Abständen angeordneten Auslaßöffnungen (51) aufweist, und die Bewegung des Bodenblatts im Stapel mittels der genannten Fördereinrichtung (37) in die genannte Tasche (53) hinein eine taschenförmige Vertiefung im Bodenblatt bewirkt, wodurch ein Zwischenraum zwischen dem Bodenblatt und dem restlichen Teil des Stapels zur Aufnahme der Mehrzahl von Luftströmen von dem genannten Luftmesser (12) geschaffen ist, um eine optimierte Luftströmung über der Oberseite des Bodenblattes zum Halten des Bodenblattes im Abstand vom verbleibenden Teil des Stapels zu schaffen.

7. Blatt-Trenn- und Födervorrichtung nach irgendeinem vorhergehenden Anspruch, mit Mitteln zum Steuern des Betriebs der genannten Fördereinrichtung (37) und der Vakuumkammer (41) derart, daß das Blatt einem subatmosphärischen Druck ausgesetzt ist, um das Bodenblatt im Stapel in Kontakt mit der Fördereinrichtung (37) für einen vorbestimmten Zeitraum zu ziehen, bevor die Fördereinrichtung (37) aktiviert wird, um das Blatt vom Boden des Stapels abzufördern.

8. Blatt-Trenn- und Fördervorrichtung nach irgendeinem vorhergehenden Anspruch, in welcher die obere Fläche des genannten Tabletts (5) darin ausgebildete Riefelungen (53, 55) aufweist, und das Luftmesser (12) eingerichtet ist, eine Luftströmung in Richtung der Riefelungen (53, 55) zwischen der oberen Fläche des genannten Tabletts (5) und der Unterseite des Bodenblattes im Blattstapel zu erzeugen, wobei die genannten Riefelungen (53, 55) eine laminare Luftströmmung über dem genannten Tablett (5) unterstützen, um Turbulenzen zu verringern und den Anhebe-Effekt der Lufteinblasungs-Einrichtung zu erhöhen.

FIG. I

FIG. 2

FIG. 3

FIG. 4

9

45  45

43

5

53

0 027 045

FIG. 5

FIG. 6